# EUROPEAN PATENT SPECIFICATION

(11) **EP 3 411 573 B1**
(45) Date of publication and mention of the grant of the patent: **01.04.2020**
(21) Application number: 16705976.5
(22) Date of filing: 04.02.2016
(51) Int. Cl.: F02B 37/013, F02B 67/10, F02B 37/007, F02M 35/116

(54) **MULTI-CYLINDER PISTON ENGINE**
MEHRZYLINDERBRENNKRAFTMASCHINE
MOTEUR A COMBUSTION MULTICYLINDRE

(43) Date of publication of application: 12.12.2018
(73) Proprietor: Wärtsilä Finland Oy, 65100 Vaasa (FI)
(72) Inventor: TUOMINEN, Jouni, 65100 Vaasa (FI); RAIKIO, Tero, 65100 Vaasa (FI); VAARASTO, Matti, 65100 Vaasa (FI)
(74) Representative: Berggren Oy, Helsinki & Oulu
(86) International application number: PCT/FI2016/050071
(87) International publication number: WO 2017/134333

(56) References cited:
- WO-A1-2013/087990
- WO-A1-2015/064449
- WO-A2-2012/155046
- DE-A1-102006 004 725
- US-A1- 2002 056 444
- US-A1- 2014 182 284

## Description

### Technical field of the invention

The present invention relates to a multi-cylinder piston engine in accordance with the preamble of claim 1.

### Background of the invention

Two-stage turbocharging is becoming more and more common in large piston engines, such as ship and power plant engines. In two-stage turbocharging two turbochargers are arranged in series. Exhaust gases from an engine are conducted into a high-pressure turbocharger and from the high-pressure turbocharger into a low-pressure turbocharger. Pressure of intake air is raised to first level in the low-pressure turbocharger and to a second, higher level in the high-pressure turbocharger. With two-stage turbocharging, efficiency of the engine can be improved, since the energy of the exhaust gases is more effectively utilized. Two-stage turbocharging also enables higher intake air pressures. With higher intake air pressure, higher power output can be achieved for a given engine displacement, which enables use of smaller engines. In addition, higher intake air pressure allows earlier closing of intake valves during intake stroke (Miller cycle), which helps in reducing NO_{X} emissions, as described in document WO 2013/087990.

In V-engines, each bank of the engine is often provided with own turbochargers. A V-engine with two-stage turbocharging can thus comprise two high-pressure turbochargers and two low-pressure turbochargers. Especially placing of the low-pressure turbochargers, which are larger and heavier than the high-pressure turbochargers, is often problematic.

### Summary of the invention

An object of the present invention is to provide an improved multi-cylinder piston engine. The characterizing features of the engine according to the invention are given in the characterizing part of claim 1.

The engine according to the invention has a driving end and a free end and comprises an engine block, where cylinders are arranged in a first bank and a second bank, a first high-pressure turbocharger comprising a turbine that is arranged to receive exhaust gas from the cylinders of the first bank and a compressor for supplying pressurized intake air to the cylinders of the engine, a second high-pressure turbocharger comprising a turbine that is arranged to receive exhaust gas from the cylinders of the second bank and a compressor for supplying pressurized intake air to the cylinders of the engine, a first low-pressure turbocharger comprising a turbine that is arranged to receive exhaust gas from the turbine of the first high-pressure turbocharger and a compressor for supplying pressurized intake air to the compressor of the first high-pressure turbocharger, a second low-pressure turbocharger comprising a turbine that is arranged to receive exhaust gas from the turbine of the second high-pressure turbocharger and a compressor for supplying pressurized intake air to the compressor of the second high-pressure turbocharger, and a first turbocharger bracket having a support surface supporting the high-pressure turbochargers. The engine further comprises a second turbocharger bracket that is arranged at the free end of the engine and comprises a support surface supporting the low-pressure turbochargers, the support surface of the second turbocharger bracket being at a lower level than the support surface of the first turbocharger bracket.

In the engine according to the invention, the large and heavy low-pressure turbochargers are arranged at a lower level than in typical turbocharging layouts. The center of gravity of the turbocharging system is thus lowered, which improves the dynamic behavior of the turbocharging system and reduces vibrations.

According to an embodiment of the invention, the engine is arranged on a base frame, and the second turbocharger bracket is supported by the base frame. The second turbocharger bracket does thus not need a separate base frame. The first turbocharger bracket can be supported by the engine block in a conventional way.

According to an embodiment of the invention, a center line of the second turbocharger bracket is aligned with the longitudinal center line of the engine. The low-pressure turbochargers can be arranged symmetrically in relation to the longitudinal center line of the engine.

According to an embodiment of the invention, a pump cover is attached to the second turbocharger bracket. This allows easy access to the pump cover and the pumps inside the pump cover.

According to an embodiment of the invention, the second turbocharger bracket comprises water and/or oil ducts. This is practical especially if the pump cover is attached to the second turbocharger bracket.

The second turbocharger bracket can be attached to the engine block or it can be arranged at a distance from the engine block in the longitudinal direction of the engine.

According to an embodiment of the invention, the engine comprises low-pressure charge air coolers and high-pressure charge air coolers and the low-pressure turbochargers are supported against a surface that is below the high-pressure charge air coolers of the engine. The surface can also be below the low-pressure charge air coolers of the engine.

According to an embodiment of the invention, charge air coolers are attached to the second turbocharger bracket.

### Brief description of the drawings

Embodiments of the invention are described below in more detail with reference to the accompanying drawings, in which
Fig. 1 shows schematically a turbocharging system of a piston engine,
Fig. 2 shows schematically a turbocharged engine that is arranged to drive a generator,
Fig. 3 shows a turbocharging system layout according to a first embodiment of the invention,
Fig. 4 shows a side view of the turbocharging system layout of figure 3,
Fig. 5 shows a top view of the turbocharging system layout of figure 3,
Fig. 6 shows a turbocharging system layout according to a second embodiment of the invention,
Fig. 7 shows a side view of the turbocharging system layout of figure 6,
Fig. 8 shows a top view of the turbocharging system layout of figure 6,
Fig. 9 shows a turbocharging system layout according to a third embodiment of the invention,
Fig. 10 shows a side view of the turbocharging system layout of figure 9, and
Fig. 11 shows a top view of the turbocharging system layout of figure 9.

### Description of embodiments of the invention

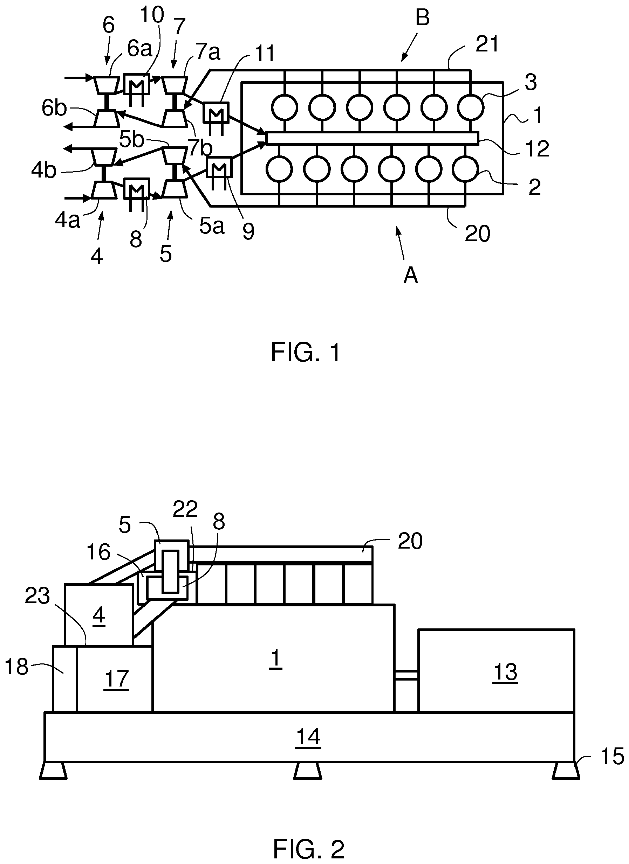

Figure 1 shows schematically intake and exhaust systems of a multi-cylinder piston engine 1. The engine 1 comprises a plurality of cylinders 2, 3, which are arranged in a V-configuration. The engine 1 is thus a V-engine. Cylinders 2 on the left hand side of the engine 1 when seen from a flywheel end of the engine 1 form an A-bank and cylinders 3 on the right hand side form a B-bank. In the example of figure 1, the engine 1 comprises 12 cylinders 2, 3, but the engine 1 could comprise any reasonable even number of cylinders 2, 3, for example 14, 16, 18 or 20. The engine 1 is a large internal combustion engine, such as a main or an auxiliary engine of a ship or an engine that is used at a power plant for producing electricity. The cylinder bore of the engine 1 is at least 150 mm.

The engine 1 is provided with a two-stage turbocharging system. Intake air of the engine 1 is thus pressurized in two stages. In a first stage, the pressure of the intake air is raised from the ambient pressure to a first level. In a second stage, the pressure of the intake air is raised from the first level to a second level, which is higher than the first level. The turbocharging system of the engine 1 comprises two turbochargers 4, 5, 6, 7 for each bank A, B of the engine 1. A first low-pressure turbocharger 4 is provided for A-bank of the engine 1 and a second low-pressure turbocharger 6 is provided for B-bank of the engine 1. Similarly, a first high-pressure turbocharger 5 is provided for A-bank of the engine 1 and a second high-pressure turbocharger 7 is provided for B-bank of the engine 1. The low-pressure turbochargers 4, 6 are responsible for the first stage of the turbocharging and the high-pressure turbochargers 5, 7 are responsible for the second stage of the turbocharging. Each turbocharger 4, 5, 6, 7 comprises a compressor 4a, 5a, 6a, 7a and a turbine 4b, 5b, 6b, 7b.

Exhaust gas from the cylinders 2 of A-bank is received by a first exhaust gas receiver 20. From the first exhaust gas receiver 20, the exhaust gas is conveyed to the turbine 5b of the first high-pressure turbocharger 5. From the turbine 5b of the first high-pressure turbocharger 5, the exhaust gas is conveyed to the turbine 4b of the first low-pressure turbocharger 4. Exhaust gas from the cylinders 3 of B-bank is received by a second exhaust gas receiver 21. From the second exhaust gas receiver 21, the exhaust gas is conveyed to the turbine 7b of the second high-pressure turbocharger 7. From the turbine 7b of the second high-pressure turbocharger 7, the exhaust gas is conveyed to the turbine 6b of the second low-pressure turbocharger 6.

Intake air of the engine 1 is first received by the compressors 4a, 6a of the first and second low-pressure turbochargers 4, 6. From the compressor 4a of the first low-pressure turbocharger 4, the intake air is conveyed to the compressor 5a of the first high-pressure turbocharger 5. From the compressor 6a of the second low-pressure turbocharger 6, the intake air is conveyed to the compressor 7b of the second high-pressure turbocharger 7. A first low-pressure charge air cooler 8 is arranged between the compressor 4a of the first low-pressure turbocharger 4 and the compressor 5a of the first high-pressure turbocharger 5. A second low-pressure charge air cooler 10 is arranged between the compressor 6a of the second low-pressure turbocharger 6 and the compressor 7a of the second high-pressure turbocharger 7. From the compressors 5a, 7a of the high-pressure turbochargers 5, 7, the intake air is conveyed to an air receiver 12. A first high-pressure charge air cooler 9 is arranged between the compressor 5a of the first high-pressure turbocharger 5 and the air receiver 12 and a second high-pressure charger air cooler 11 is arranged between the compressor 7a of the second high-pressure turbocharger 7 and the air receiver 12. Instead of two high-pressure charge air coolers 9, 11, intake air could be introduced from the compressors 5a, 7a of the high-pressure turbochargers 5, 7 into the air receiver 12 via a single high-pressure charge air cooler.

From the air receiver 12, the intake air is introduced into the cylinders 2, 3 of the engine 12. Instead of a single air receiver 12 that is connected to the cylinders 2, 3 of both A-bank and B-bank, the intake system of the engine 1 could comprise two air receivers. Intake air from the compressor 5a of the first high-pressure turbocharger 5 could thus be introduced into a first air receiver and intake air from the compressor 7a of the second high-pressure turbocharger 7 could be introduced into a second air receiver. From the first air receiver, the intake air would be introduced into the cylinders 2 of A-bank and from the second air receiver, the intake air would be introduced into the cylinders 3 of B-bank.

In figure 2 is shown schematically a side view of the engine 1 of figure 1. The engine 1 comprises a turbocharging system layout according to a first embodiment of the invention. The engine 1 is shown from the direction of A-bank. The engine 1 is arranged to drive a generator 13. The engine 1 has a front end and a rear end. The generator 13 is coupled to the rear end of the engine 1. The rear end is thus a flywheel end and a driving end of the engine 1. The front end is a free end. Instead of being coupled to the generator 13, the engine 1 could be arranged to drive, for instance, a propeller shaft of a ship. According to the invention, the turbochargers 4, 5, 6, 7 of the engine 1 are arranged at the free end of the engine 1. In figure 2, only the turbochargers 4, 5 on the A-bank side of the engine 1 can be seen. The engine 1 and the generator 13 are arranged on a common base frame 14. The base frame 14 is supported on a floor structure, hull of a ship or other similar structure by resilient supports 15. It is not necessary that the base frame 14 supports also the generator 13, but the generator 13 could also be provided with an own base frame. The engine 1 further comprises a first turbocharger bracket 16 and a second turbocharger bracket 17. The first turbocharger bracket 16 is configured to support the high-pressure turbochargers 5, 7. The first turbocharger bracket 16 comprises a support surface 22, against which the high-pressure turbochargers 5, 7 are supported.

The second turbocharger bracket 17 is configured to support the low-pressure turbochargers 4, 6. The second turbocharger bracket 17 comprises a support surface 23, against which the low-pressure turbochargers 4, 6 are supported. Both turbocharger brackets 16, 17 are arranged at the free end of the engine 1. The use of separate turbocharger brackets 16, 17 for the high-pressure turbochargers 5, 7 and the low-pressure turbochargers 4, 6 allows placing the low-pressure turbochargers 4, 6 at a lower level. The support surface 23 of the second turbocharger bracket 17 is at a lower level than the support surface 22 of the first turbocharger bracket 16. The support surface 23 of the second turbocharger bracket 17 is also below the upper surface of the engine block of the engine 1. The low-pressure turbochargers 4, 6 are larger and heavier than the high-pressure turbochargers 5, 7. By lowering the center of gravity of the turbocharging system, vibrations can be reduced.

The engine 1 is further provided with a pump cover 18. In the embodiment of figure 2, the pump cover 18 is attached to the second turbocharger bracket 17. The pump cover 18 is configured to accommodate different auxiliaries of the engine 1, such as an oil pump and cooling water pumps. The first turbocharger bracket 16 is supported by an engine block. The second turbocharger bracket 17 is arranged on the base frame 14 of the engine 1. The low-pressure charge air coolers 8, 10 are attached to the first turbocharger bracket 16.

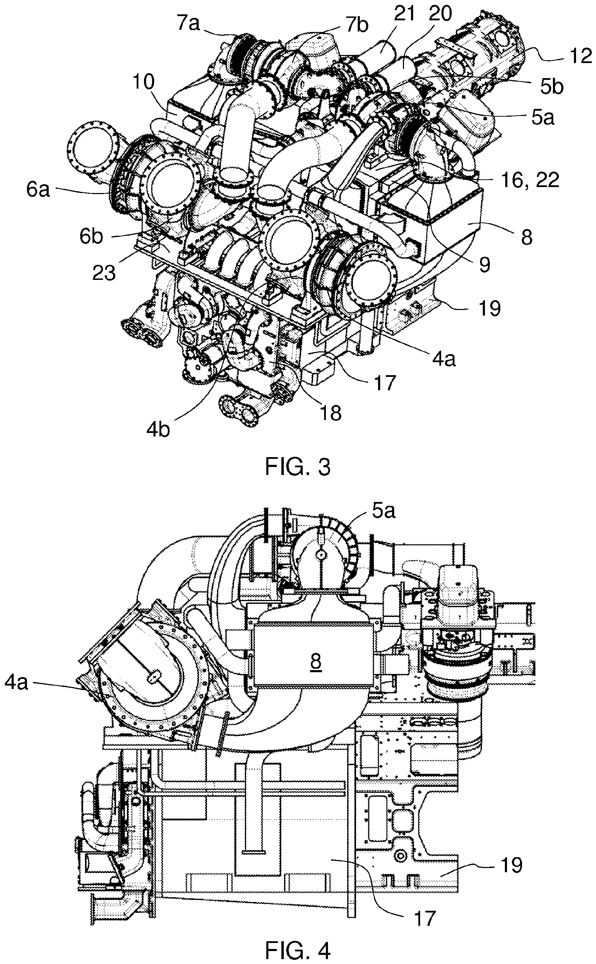

Figures 3 to 5 show the embodiment of figure 2 in more detail. In figures 3 to 5, part of the engine block 19 of the engine 1 can be seen. The first turbocharger bracket 16 is arranged partly above the engine block 19. The engine block 19 thus supports the first turbocharger bracket 16 in the vertical direction. The high-pressure turbochargers 5, 7 are arranged above the level of the upper surface of the engine block 19. This allows the high-pressure charge air coolers 9, 11 to be placed below the high-pressure turbochargers 5, 7. The low-pressure turbochargers 4, 6 can thus be arranged close to the engine block 19 and the second turbocharger bracket 17 can be supported by the base frame 14 of the engine 1.

The second turbocharger bracket 17 is attached to the rear end of the engine block 19. In the vertical direction, the second turbocharger bracket 17 is supported by the base frame 14 of the engine 1 (not shown in figures 3 to 5). At the free end of the engine 1, the base frame 14 therefore extends beyond the engine block 19 in the longitudinal direction of the engine 1. The second turbocharger bracket 17 could also be provided with an own base frame for supporting it against the ground, or the second turbocharger bracket 17 could be supported directly against the ground via resilient support elements. However, it is practical to configure the second turbocharger bracket 17 such that one base frame 14 can support both the engine 1 and the second turbocharger bracket 17 and possibly also a generator 3. The longitudinal center line of the second turbocharger bracket 17 is aligned with the longitudinal center line of the engine 1. The low-pressure turbochargers 4, 6 are arranged symmetrically in relation to the longitudinal center line of the engine 1. The second low-pressure turbocharger 6 is thus directly opposite to the first low-pressure turbocharger 4 on the opposite side of the longitudinal center line of the engine 1.

In the embodiment of figures 3 to 5, the pump cover 18 of the engine 1 is attached to the second turbocharger bracket 17. An oil pump and cooling medium pumps of the engine 1 are arranged inside the pump cover 18. The second turbocharger bracket 17 comprises a space for accommodating a shaft that is used for transmitting power from the crankshaft of the engine 1 to the pumps that are arranged inside the pump cover 18. The second turbocharger bracket 17 can also be provided with a space for accommodating different ducts, for instance cooling medium ducts. Different ducts, such as cooling medium ducts could also be integrated to the second turbocharger bracket 17. By arranging the pump cover 18 at the rear end of the second turbocharger bracket 17, the pumps that are arranged inside the pump cover 18 can be easily accessed. In the embodiment of figures 3 to 5, the low-pressure charge air coolers 8, 10 are attached to the sides of the first turbocharger bracket 16. The high-pressure charge air coolers 9, 11 are arranged inside the first turbocharger bracket 16. The upper surface 23 of the second turbocharger bracket 17, against which the low-pressure turbochargers 4, 6 are supported, is below the charge air coolers 8, 9, 10, 11.

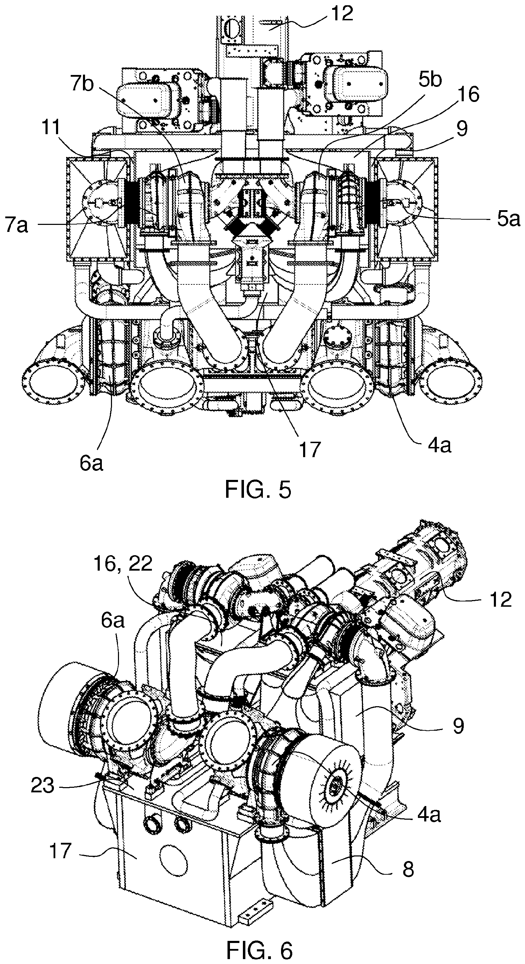

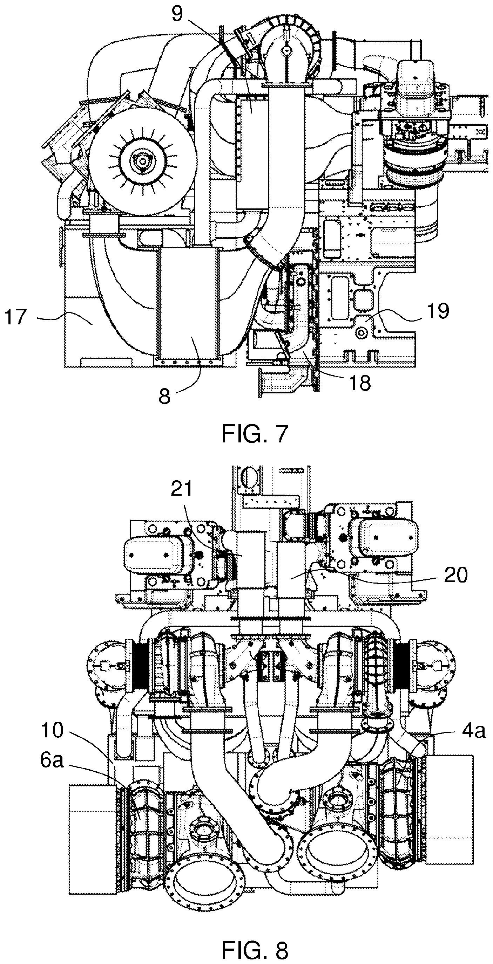

Figures 6 to 8 show a second embodiment of the invention. This embodiment is similar to the first embodiment, but the second turbocharger bracket 17 is not attached to the engine block 19. Instead, the second turbocharger bracket 17 is arranged at a distance from the engine block 19. Also, the pump cover 18 is not attached to the second turbocharger bracket 17, but it is attached to the engine block 19 at the free end of the engine 1 in a conventional way. The benefit of this arrangement is that a shaft for transmitting power from the crankshaft of the engine 1 to the pump cover 18 is not needed. However, the pumps inside the pump cover 18 are more difficult to access than in the first embodiment. A further difference is that the low-pressure charge air coolers 8, 10 are attached to the sides of the second turbocharger bracket 17 instead of the sides of the first turbocharger bracket 16.

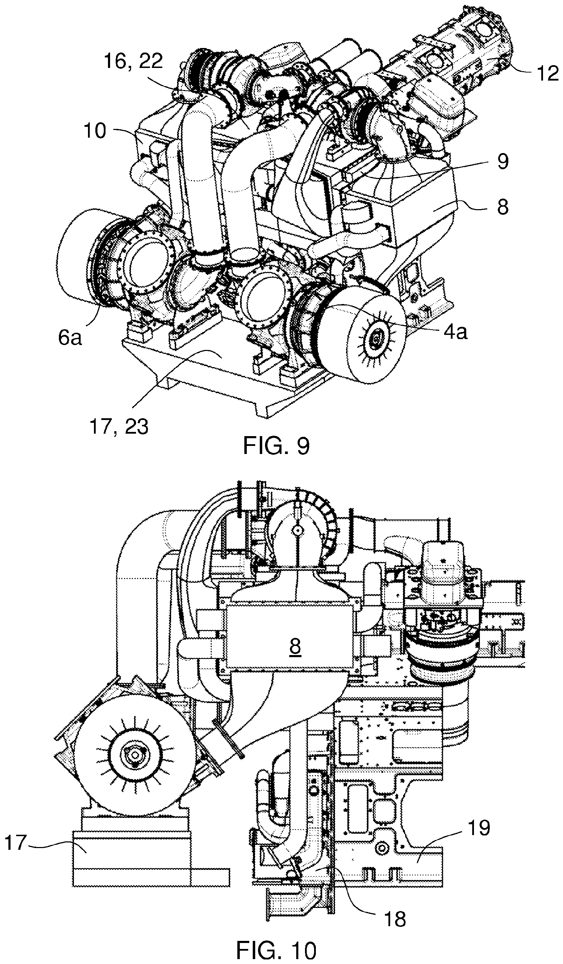

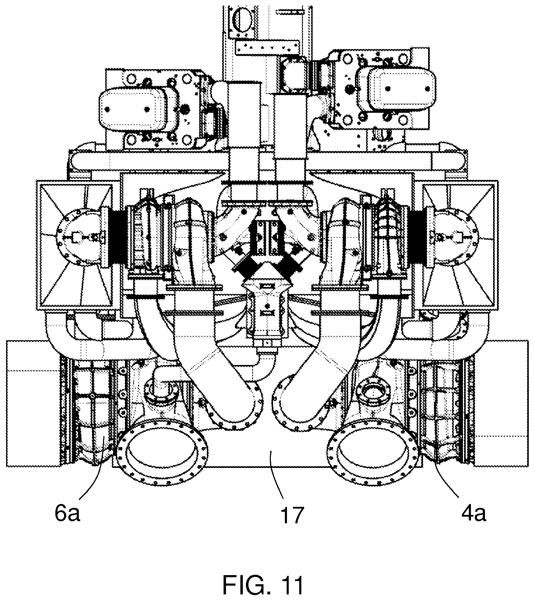

Figures 9 to 11 show a third embodiment of the invention. The third embodiment is similar to the first and the second embodiments. As in the second embodiment, the second turbocharger bracket 17 is not attached to the engine block 19, but it is arranged at a distance from the engine block 19. The pump cover 18 is attached to the engine block 19. The second turbocharger bracket 17 is lower than in the other embodiments. The low-pressure turbochargers 4, 6 can thus be arranged even lower than in the other embodiments. The low-pressure charge air coolers 8, 10 are attached to the first turbocharger bracket 16 in a similar way as in the first embodiment.

It will be appreciated by a person skilled in the art that the invention is not limited to the embodiments described above, but may vary within the scope of the appended claims.

## Claims

1. A multi-cylinder piston engine (1) having a driving end and a free end, the engine (1) comprising
- an engine block (19), where cylinders (2, 3) are arranged in a first bank (A) and a second bank (B),
- a first high-pressure turbocharger (5) comprising a turbine (5b) that is arranged to receive exhaust gas from the cylinders (2) of the first bank (A) and a compressor (5a) for supplying pressurized intake air to the cylinders (2, 3) of the engine (1),
- a second high-pressure turbocharger (7) comprising a turbine (7b) that is arranged to receive exhaust gas from the cylinders (3) of the second bank (B) and a compressor (7a) for supplying pressurized intake air to the cylinders (2, 3) of the engine (1),
- a first low-pressure turbocharger (4) comprising a turbine (4b) that is arranged to receive exhaust gas from the turbine (5b) of the first high-pressure turbocharger (5) and a compressor (4a) for supplying pressurized intake air to the compressor (5a) of the first high-pressure turbocharger (5),
- a second low-pressure turbocharger (6) comprising a turbine (6b) that is arranged to receive exhaust gas from the turbine (7b) of the second high-pressure turbocharger (7) and a compressor (6a) for supplying pressurized intake air to the compressor (7a) of the second high-pressure turbocharger (7), and
- a first turbocharger bracket (16) having a support surface (22) supporting the high-pressure turbochargers (5, 7),
**characterized in that** the engine (1) comprises a second turbocharger bracket (17) that is arranged at the free end of the engine (1) and comprises a support surface (23) supporting the low-pressure turbochargers (4, 6), the support surface (23) of the second turbocharger bracket (17) being at a lower level than the support surface of the first turbocharger bracket (16), wherein the engine (1) is arranged on a base frame (14), and the second turbocharger bracket (17) is supported by the base frame (14).

2. An engine (1) according to claim 1, wherein the first turbocharger bracket (16) is supported by the engine block (19).

3. An engine (1) according to claim 1 or 2, wherein a center line of the second turbocharger bracket (17) is aligned with the longitudinal center line of the engine (1).

4. An engine (1) according to any of the preceding claims, wherein the low-pressure turbochargers (4, 6) are arranged symmetrically in relation to the longitudinal center line of the engine (1).

5. An engine (1) according to any of the preceding claims, wherein a pump cover (18) is attached to the second turbocharger bracket (17).

6. An engine (1) according to any of the preceding claims, wherein the second turbocharger bracket (17) comprises water and/or oil ducts.

7. An engine (1) according to any of the preceding claims, wherein the second turbocharger bracket (17) is attached to the engine block (19).

8. An engine (1) according to any of claims 1 to 6, wherein the second turbocharger bracket (17) is arranged at a distance from the engine block (19) in the longitudinal direction of the engine (1).

9. An engine (1) according to any of the preceding claims, wherein the engine (1) comprises low-pressure charge air coolers (8, 10) and high-pressure charge air coolers (9, 11) and the low-pressure turbochargers (4, 6) are supported against a surface (23) that is below the high-pressure charge air coolers (9, 11) of the engine (1).

10. An engine (1) according to claim 9, wherein the low-pressure turbochargers (4, 6) are supported against a surface (23) that is below the low-pressure charge air coolers (8, 10) of the engine (1).

11. An engine (1) according to any of the preceding claims, wherein charge air coolers (8, 10) are attached to the second turbocharger bracket (17).

## Patentansprüche

1. Multizylinderkolbenmotor (1), der ein Antriebsende und ein freies Ende aufweist, der Motor (1) umfassend
- einen Motorblock (19), wobei Zylinder (2, 3) in einer ersten Bank (A) und einer zweiten Bank (B) angeordnet sind,
- einen ersten Hochdruckturbolader (5), umfassend eine Turbine (5b), die angeordnet ist, Abgas von den Zylindern (2) der ersten Bank (A) zu empfangen, und einen Kompressor (5a), der den Zylindern (2, 3) des Motors (1) unter Druck stehende Eingangsluft zuführt,
- einen zweiten Hochdruckturbolader (7), umfassend eine Turbine (7b), die angeordnet ist, Abgas von den Zylindern (3) der zweiten Bank (B) zu empfangen, und einen Kompressor (7a), der den Zylindern (2, 3) des Motors (1) unter Druck stehende Eingangsluft zuführt,
- einen ersten Niederdruckturbolader (4), umfassend eine Turbine (4b), die angeordnet ist, Abgas von der Turbine (5b) des ersten Hochdruckturboladers (5) zu empfangen, und einen Kompressor (4a), der dem Kompressor (5a) des ersten Hochdruckturboladers (5) unter Druck stehende Eingangsluft zuführt,
- einen zweiten Niederdruckturbolader (6), umfassend eine Turbine (6b), die angeordnet ist, Abgas von der Turbine (7b) des zweiten Hochdruckturboladers (7) zu empfangen, und einen Kompressor (6a), der dem Kompressor (7a) eines zweiten Hochdruckturboladers (7) unter Druck stehende Eingangsluft zuführt, und
- eine erste Turboladerklammer (16), die eine Trägerfläche (22) aufweist, die den Hochdruckturbolader (5, 7) trägt,
**dadurch gekennzeichnet, dass** der Motor (1) eine zweite Turboladerklammer (17) umfasst, die an dem freien Ende des Motors (1) angeordnet ist, und eine Trägerfläche (23) umfasst, die die Niederdruckturbolader (4, 6) trägt, wobei sich die Trägerfläche (23) der zweiten Turboladerklammer (17) auf einer tieferen Ebene befindet als die Trägerfläche der ersten Turboladerklammer (16), wobei der Motor (1) an einem Grundrahmen (14), angeordnet ist und die zweite Turboladerklammer (17) durch den Grundrahmen (14) getragen wird.

2. Motor (1) nach Anspruch 1, wobei die erste Turboladerklammer (16) durch den Motorblock (19) getragen wird.

3. Motor (1) nach Anspruch 1 oder 2, wobei eine Mittellinie der zweiten Turboladerklammer (17) an der Längsmittellinie des Motors (1) ausgerichtet ist.

4. Motor (1) nach einem der vorhergehenden Ansprüche, wobei die Niederdruckturbolader (4, 6) bezüglich der Längsmittellinie des Motors (1) symmetrisch angeordnet sind.

5. Motor (1) nach einem der vorhergehenden Ansprüche, wobei eine Pumpenabdeckung (18) an der zweiten Turboladerklammer (17) befestigt ist.

6. Motor (1) nach einem der vorhergehenden Ansprüche, wobei die zweite Turboladerklammer (17) Wasser- und/oder Ölkanäle umfasst.

7. Motor (1) nach einem der vorhergehenden Ansprüche, wobei die zweite Turboladerklammer (17) an dem Motorblock (19) befestigt ist.

8. Motor (1) nach einem der Ansprüche 1 bis 6, wobei die zweite Turboladerklammer (17) in einem Abstand von dem Motorblock (19) in der Längsrichtung des Motors (1) angeordnet ist.

9. Motor (1) nach einem der vorhergehenden Ansprüche, wobei der Motor (1) Niederdruckladungsluftkühler (8, 10) und Hochdruckladungsluftkühler (9, 11) umfasst und die Niederdruckturbolader (4, 6) an einer Fläche (23) getragen werden, die unter den Hochdruckladungsluftkühlern (9, 11) des Motors (1) liegt.

10. Motor (1) nach Anspruch 9, wobei die Niederdruckturbolader (4, 6) an einer Fläche (23) getragen werden, die unter den Niederdruckladungsluftkühlern (8, 10) des Motors (1) liegt.

11. Motor (1) nach einem der vorhergehenden Ansprüche, wobei Ladungsluftkühler (8, 10) an der zweiten Turboladerklammer (17) befestigt ist.

## Revendications

1. Moteur à pistons multi-cylindres (1) ayant une extrémité d'entraînement et une extrémité libre, le moteur (1) comprenant
- un bloc moteur (19), où des cylindres (2, 3) sont agencés dans un premier banc (A) et un second banc (B),
- un premier turbocompresseur haute pression (5) comprenant une turbine (5b) qui est agencée pour recevoir des gaz d'échappement des cylindres (2) du premier banc (A) et un compresseur (5a) pour fournir de l'air d'admission pressurisé aux cylindres (2, 3) du moteur (1),
- un second turbocompresseur haute pression (7) comprenant une turbine (7b) qui est agencée pour recevoir des gaz d'échappement des cylindres (3) du second banc (B) et un compresseur (7a) pour fournir de l'air d'admission pressurisé aux cylindres (2, 3) du moteur (1),
- un premier turbocompresseur basse pression (4) comprenant une turbine (4b) qui est agencée pour recevoir des gaz d'échappement de la turbine (5b) du premier turbocompresseur haute pression (5) et un compresseur (4a) pour fournir de l'air d'admission pressurisé au compresseur (5a) du premier turbocompresseur haute pression (5),
- un second turbocompresseur basse pression (6) comprenant une turbine (6b) qui est agencée pour recevoir des gaz d'échappement de la turbine (7b) du second turbocompresseur haute pression (7) et un compresseur (6a) pour fournir de l'air d'admission pressurisé au compresseur (7a) du second turbocompresseur haute pression (7), et
- une première fixation de turbocompresseur (16) ayant une surface de support (22) supportant les turbocompresseurs haute pression (5, 7),
**caractérisé en ce que** le moteur (1) comprend une seconde fixation de turbocompresseur (17) qui est agencée sur l'extrémité libre du moteur (1) et comprend une surface de support (23) supportant les turbocompresseurs basse pression (4, 6), la surface de support (23) de la seconde fixation de turbocompresseur (17) étant à un niveau plus bas que la surface de support de la première fixation de turbocompresseur (16), dans lequel le moteur (1) est agencé sur un cadre de base (14) et la seconde fixation de turbocompresseur (17) est supportée par le cadre de base (14).

2. Moteur (1) selon la revendication 1, dans lequel la première fixation de turbocompresseur (16) est supportée par le bloc moteur (19).

3. Moteur (1) selon la revendication 1 ou 2, dans lequel une ligne médiane de la seconde fixation de turbocompresseur (17) est alignée avec la ligne centrale longitudinale du moteur (1).

4. Moteur (1) selon l'une quelconque des revendications précédentes, dans lequel les turbocompresseurs basse pression (4, 6) sont agencés symétriquement par rapport à la ligne centrale longitudinale du moteur (1) .

5. Moteur (1) selon l'une quelconque des revendications précédentes, dans lequel un capot de pompe (18) est fixé à la seconde fixation de turbocompresseur (17).

6. Moteur (1) selon l'une quelconque des revendications précédentes, dans lequel la seconde fixation de turbocompresseur (17) comprend des tuyaux d'eau et/ou d'huile.

7. Moteur (1) selon l'une quelconque des revendications précédentes, dans lequel la seconde fixation de turbocompresseur (17) est fixée au bloc moteur (19).

8. Moteur (1) selon l'une quelconque des revendications 1 à 6, dans lequel la seconde fixation de turbocompresseur (17) est agencée à une distance du bloc moteur (19) dans la direction longitudinale du moteur (1).

9. Moteur (1) selon l'une quelconque des revendications précédentes, dans lequel le moteur (1) comprend des refroidisseurs d'air de suralimentation basse pression (8, 10) et des refroidisseurs d'air de suralimentation haute pression (9, 11) et les turbocompresseurs basse pression (4, 6) sont supportés contre une surface (23) qui est en-dessous des refroidisseurs d'air de suralimentation haute pression (9, 11) du moteur (1).

10. Moteur (1) selon la revendication 9, dans lequel les turbocompresseurs basse pression (4, 6) sont supportés contre une surface (23) qui est en-dessous des refroidisseurs d'air de suralimentation basse pression (8, 10) du moteur (1).

11. Moteur (1) selon l'une quelconque des revendications précédentes, dans lequel les refroidisseurs d'air de suralimentation (8, 10) sont fixés à la seconde fixation de turbocompresseur (17).
